# EUROPÄISCHE PATENTSCHRIFT

(11) **EP 1 541 882 B1**
(45) Veröffentlichungstag und Bekanntmachung des Hinweises auf die Patenterteilung: **15.11.2006**
(21) Anmeldenummer: 04028527.2
(22) Anmeldetag: 02.12.2004
(51) Int. Cl.: F16B 37/04

(54) **Befestigungselement**
Fastening element
Elément de fixation

(30) Priorität: 11.12.2003 DE 10358379
(43) Veröffentlichungstag der Anmeldung: 15.06.2005
(73) Patentinhaber: Newfrey LLC, Newark, Delaware 19711 (US)
(72) Erfinder: Wimmer, Karin, 61231 Bad Nauheim (DE); Schmidt, Thomas, 38275 Haverlah (DE); Becker, Rupert, 35325 Mücke (DE); Reindl, Johann, 35444 Biebertal (DE)
(74) Vertreter: Haar, Lucas Heinz Jörn

(56) Entgegenhaltungen:
- DE-B- 1 059 722
- US-A- 3 999 583
- US-A- 4 781 504
- PATENT ABSTRACTS OF JAPAN Bd. 2000, Nr. 01, 31. Januar 2000 (2000-01-31) -& JP 11 294428 A (MATSUYAMA SEISAKUSHO:KK; KISHIWADA STAINLESS KK), 26. Oktober 1999 (1999-10-26)

## Beschreibung

Die Erfindung betrifft ein Befestigungselement zum Befestigen eines ein Befestigungsloch aufweisenden Bauelementes, wobei das Befestigungselement einen im wesentlichen U-förmigen Klemmbereich hat, der im Gebrauch das Bauelement zumindest teilweise umgreift und zwei gegenüberliegende Schenkel hat, die über einen Verbindungsbereich einstückig miteinander verbunden sind, wobei die Schenkel mit durchgehenden Öffnungen versehen sind, die zur Aufnahme eines das Befestigungsloch des Bauelements durchdringenden Stifts oder Bolzens dienen,
und wobei an einem ersten Schenkel auf der dem zweiten Schenkel abgekehrten Seite eine Mutter derart angebracht ist, dass die Verbindung zwischen dem ersten Schenkel und der Mutter mittels einer auf die Mutter einwirkenden Trennkraft lösbar ist.

Bei einem aus DE-B-1 059 722 bekannten Befestigungselement der angegebenen Art weist der aus einem Blechstreifen bestehende erste Schenkel eine der sechskantigen Außenkontur der Mutter entsprechende Lochung auf. Die Mutter hat eine Eindrehung und wird bis zur Eindrehung in die Lochung eingesteckt und darin durch Drehung in eine Eingriffslage gebracht und in der Eingriffslage durch umgebogene Sicherungslappen gegen Verdrehen gesichert. Die Herstellung eines solchen Befestigungselements ist aufwendig.

Aus der Druckschrift EP 0 353 468 B1 ist bereits ein Befestigungselement der angegebenen Art bekannt, das eine Schraubbuchse aufweist, die unmittelbar an einem der Schenkel ausgebildet ist, wobei die Schraubbuchse zunächst eine glatte Innenwand besitzt. Als Verbindungselement wird eine Schraube verwendet, die beim Einschrauben in die Schraubbuchse selbsttätig ein Gewinde ausbildet. In zahlreichen Anwendungen, insbesondere bei der Anwendung im Kraftfahrzeug, stellt sich das Problem, dass Verbindungen wieder gelöst werden sollen, ohne das Verbindungselement zu zerstören, so dass eine nochmalige Verwendung desselben möglich wird. Es ergibt sich hierbei außerdem oft die Schwierigkeit, dass eine Seite der Verbindung nicht mehr zugänglich ist. Häufig und insbesondere bei der Befestigung von Innenverkleidungen, Armaturen oder Bedienungsteilen ist dabei insbesondere der Kopf des Verbindungselementes, in den ein Lösewerkzeug eingreifen kann, nicht mehr zugänglich und kann daher nicht mehr gelöst werden.

Der Erfindung liegt die Aufgabe zugrunde, ein Befestigungselement zum Befestigen eines ein Befestigungsloch aufweisenden Bauelementes zu schaffen, das einfach und materialsparend herstellbar ist, wobei bei einseitiger Unzugänglichkeit oder Unbeweglichkeit des Verbindungselementes die Verbindung gelöst werden kann, ohne das Befestigungselement derart zu zerstören, dass eine Wiederverwendung unmöglich ist.

Die Aufgabe wird erfindungsgemäß dadurch gelöst, dass die Mutter mit dem ersten Schenkel über mit Sollbruchstellen versehene Stege verbunden ist.

Das erfindungsgemäße Befestigungselement hat insbesondere den Vorteil, dass ein Lösen und Wiederherstellen der Verbindung möglich ist, wenn auch der Kopf des Verbindungselementes, in den ein Werkzeug eingreifen kann, nicht mehr zugänglich ist. Von Vorteil ist auch, dass das erfindungsgemäße Befestigungselement einfach herstellbar ist.

Ferner wird durch die vorteilhafte Verbindung der Mutter mit dem ersten Schenkel über mit Sollbruchstellen versehene Stege erreicht, dass das Befestigungselement einfach und materialsparend herstellbar ist.

Das erfindungsgemäße Befestigungselement zum Befestigen eines ein Befestigungsloch aufweisenden Bauelementes dient weiterhin der Einsparung von Material, da das Befestigungselement mehrmals zum Befestigen des Bauelementes verwendet werden kann.

Durch die in den abhängigen Ansprüchen aufgeführten Maßnahmen sind vorteilhafte Weiterbildungen und Verbesserungen des Befestigungselementes nach Anspruch 1 möglich. Besonders vorteilhaft ist, ein Drehmoment als Trennkraft zu wählen, da hierfür geeignete Werkzeuge zur Verfügung stehen und diese auch für andere Anwendungen beim Befestigen von Bauelementen zum Einsatz kommen. Es ist weiterhin vorteilhaft, die Innenwand der Mutter glatt auszubilden, so dass der zu Befestigung dienende Stift oder Bolzen erst beim Einschrauben das Gewinde schneidet. Hierdurch wird zum einen der Anwendungsbereich des Befestigungselementes für verschiedene Gewindetypen vergrößert und zum anderen eine sicherere Befestigung des Bauelementes erreicht. Besonders vorteilhaft ist, in der Bohrung Sperrkörper anzuordnen, die federnd an einem in der Bohrung befindlichen Stift oder Bolzen anliegen und die eine Bewegung des Stiftes oder Bolzens in Richtung des Klemmbereichs, von der Mutter aus gesehen, sperren und eine Bewegung des Stiftes oder Bolzens in die Gegenrichtung zulassen. Durch diese Ausführungsform ist es möglich, das Befestigungselement auf den Stift oder Bolzen lediglich aufzustecken, wodurch bereits eine feste Verbindung geschaffen wird. Um einfach und sicher ein Lösen der Verbindung zwischen Bauelement und Befestigungselement zu erreichen und das Befestigungselement zu entfernen, weist das Befestigungselement seitlich an einem der Schenkel zwei Laschen auf, die beim Lösen oder Befestigen des Befestigungselementes ergriffen werden können. Ein am Befestigungselement vorteilhaft vorgesehener Zentrieransatz, der jeweils in die Richtung des anderen Schenkels vorspringt, ermöglicht, dass das Befestigungselement im aufgesteckten Zustand zumindest kurzzeitig auch ohne Einbringen des durchdringenden Stiftes oder Bolzens festgelegt ist und eine zusätzliche Halterung nicht notwendig ist. Die vorteilhaften Anfasungen am Zentrieransatz oder an den beiden Schenkeln erleichtern das Einführen des Bauelementes zwischen die beiden Schenkel des Befestigungselementes.

Das erfindungsgemäße Befestigungselement besteht vorzugsweise aus Kunststoff und ist vorzugsweise mittels Spritzgießen hergestellt.

Ausführungsbeispiele der Erfindung sind anhand von Zeichnungen dargestellt und in der nachfolgenden Beschreibung näher erläutert. Es zeigen
- Figur 1: eine perspektivische Ansicht eines erfindungsgemäßen Befestigungselementes von schräg oben,
- Figur 2: eine Ansicht des erfindungsgemäßen Befestigungselementes von oben,
- Figur 3: eine Ansicht des erfindungsgemäßen Befestigungselementes von der Seite,
- Figur 4: eine Ansicht des erfindungsgemäßen Befestigungselementes von vom, wobei die Mutter im Schnitt dargestellt ist,
- Figuren 5 und 6: ein Bauelement mit einem Befestigungsloch zum Befestigen mittels eines erfindungsgemäßen Befestigungselementes in einer Ansicht von oben und von der Seite sowie
- Figur 7: einen Querschnitt durch ein weiteres erfindungsgemäßes Befestigungselement mit Bauelement und Stift.

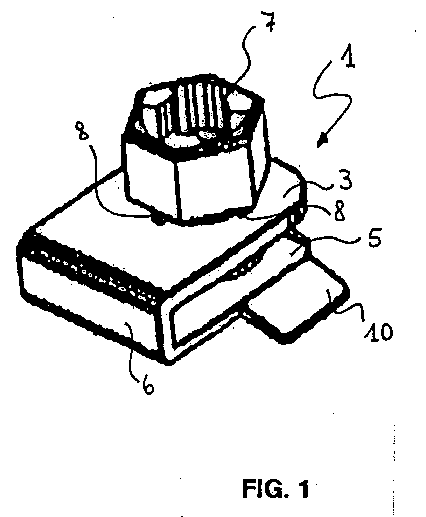

In Figur 1 ist ein erfindungsgemäßes Befestigungselement 1 in einer perspektivischen Ansicht von schräg oben dargestellt. Das Befestigungselement 1 weist einen ersten Schenkel 3 und einen zweiten Schenkel 5 auf, die über einen Verbindungsbereich 6 einstückig miteinander verbunden sind. An dem ersten Schenkel 3 ist eine Mutter 7 angeordnet. Die Mutter befindet sich auf der Seite des ersten Schenkels 3, die dem zweiten Schenkel 5 abgewandt ist. Die Mutter 7 ist über Stege 8 mit dem ersten Schenkel 3 verbunden, wobei die Stege 8 hier nicht dargestellte Sollbruchstellen aufweisen. Das Befestigungselement 1 weist am zweiten Steg 5 außerdem seitlich angeordnete Laschen 10 auf, die zur Fläche des zweiten Schenkels 5 in der vom ersten Schenkel abgewandten Richtung ein wenig geneigt sind. An diesen Laschen 10 kann das Befestigungselement 1 beim Lösen bzw. Montieren sicher ergriffen werden.

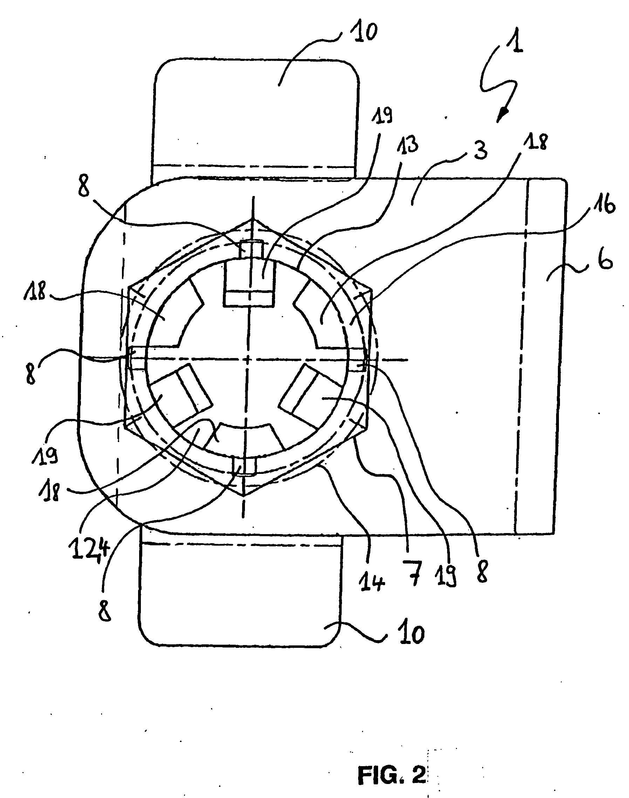

Figur 2 zeigt eine Ansicht von oben eines erfindungsgemäßen Befestigungselementes 1. Wie auch in den nachfolgenden Zeichnungen weisen die gleichen Bestandteile gleiche Bezugszeichen auf. In dieser Ansicht ist besonders gut die Bohrung 12 zu erkennen, die durch die Mutter 7 hindurchgeht. Die Bohrung 12 weist eine Innenwand 13 auf. Die Bohrung 12 wird fortgesetzt durch eine durchgehende Öffnung 4 im ersten Schenkel 3 und im zweiten Schenkel 5, wobei die Bohrung im zweiten Schenkel 5 eine Fase aufweist, deren größter Durchmesser 14 in dieser Ansicht als gestrichelte Linie erkennbar ist. Zwischen den in dieser Ansicht als Kreise erscheinenden Bestandteilen Innenwand 13 und größter Durchmesser 14 ist ein weiterer konzentrischer, gestrichelter Kreis zu erkennen, der den äußeren Durchmesser des Zentrieransatzes 16 darstellt, wobei der Zentrieransatz 16 an der Seite des zweiten Schenkels 5 angeordnet ist, die dem ersten Schenkel 3 gegenüber liegt. Verborgen dargestellt sind weiterhin die Stege 8, die mit Sollbruchstellen versehen sind und die Mutter 7 mit dem ersten Schenkel 3 verbinden. In dieser Ausführungsform der Erfindung sind vier Stege vorgesehen, es können jedoch auch zwei, drei oder mehr als vier Stege verwendet werden.

Die Stege 8 verbinden einerseits die Mutter 7 mit dem ersten Schenkel 3 und sind andererseits mit den Sollbruchstellen derart versehen, dass die Verbindung zwischen Mutter 7 und erstem Schenkel 3 mit einer auf die Mutter einwirkenden Trennkraft lösbar ist. Als Mittel zum Lösen der Verbindung zwischen Mutter 7 und erstem Schenkel 3 könnte ein Schraubenschlüssel verwendet werden.

An der Innenwand 13 der Bohrung 12 sind in diesem Ausführungsbeispiel Stege 18 und Laschen 19 angeordnet, die beim Einführen eines die Verbindung herstellenden Stiftes oder Bolzens in eine Rille des Gewindes eines derartigen Stiftes oder Bolzens eingreifen und so die Verbindung herstellen. In weiteren Ausführungsbeispielen kann die Innenwand 13 auch glatt ausgebildet oder mit einem Gewinde versehen sein.

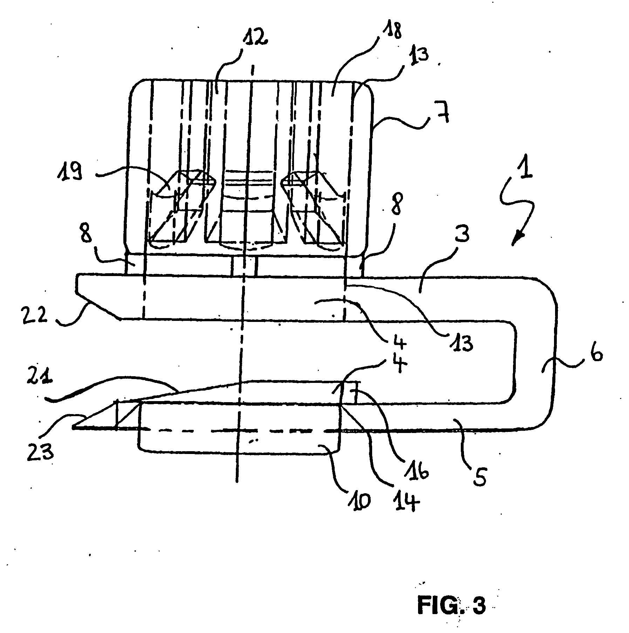

Das Befestigungselement 1 ist in Figur 3 in einer Ansicht von der Seite dargestellt, wobei wiederum die verborgenen Elemente durch gestrichelte Linie kenntlich gemacht sind. In dieser Ansicht ist besonders deutlich die Form der in der Bohrung 12 an der Innenwand 13 angeordneten fingerförmigen Elemente 19 erkennbar. Die Finger sind schräg nach innen und abgewandt vom ersten Schenkel 3 ausgerichtet, so dass sie, wenn sie in eine Rille eines in der Bohrung 12 angeordneten Stiftes oder Bolzens eingreifen, die Bewegung dieses Stiftes oder Bolzens verhindern. Ein Einschieben des Stifts oder Bolzens aus Richtung des zweiten Schenkels 5 wird nicht behindert. Deutlich erkennbar ist auch der Zentrieransatz 16, der in dem Befestigungsloch des zu befestigenden Bauelementes angeordnet wird und somit das Befestigungselement, solange noch kein Stift oder Bolzen in der Bohrung 12 oder den durchgehenden Öffnungen 4 angeordnet ist, vor dem Verrutschen sichert. Das Befestigungselement 1 weist eine Anfasung 21 auf, die auf der Seite des Zentrieransatzes 16 angeordnet ist, die dem Verbindungsbereich 6 abgewandt ist. Durch die Anfasung 21 wird das Einführen des zu befestigenden Bauelementes erleichtert. Ebenfalls auf der dem Verbindungsbereich 6 abgewandten Seite weisen der erste Schenkel 3 und der zweite Schenkel 5 Anfasungen 22, 23 auf, die die gleiche Funktion erfüllen.

In einer weiteren, nicht dargestellten Ausführungsform kann das Zentrieransatz auch am ersten Schenkel 3 auf der dem zweiten Schenkel 5 gegenüber liegenden Seite angeordnet sein.

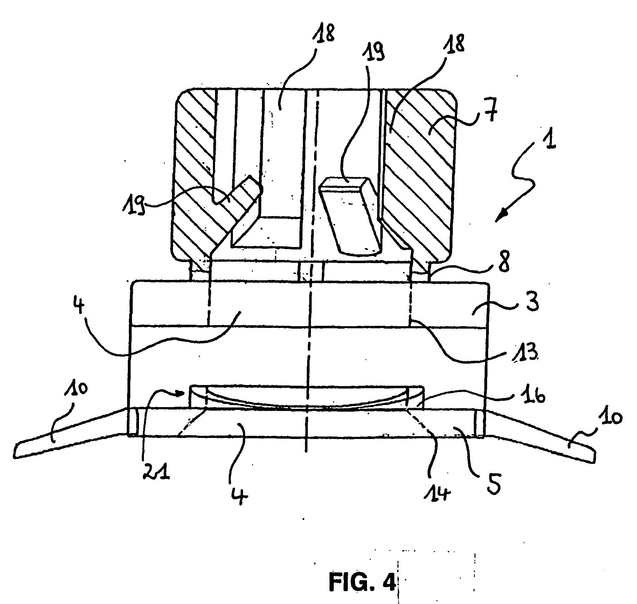

In Figur 4 ist eine Ansicht des erfindungsgemäßen Befestigungselementes von vorn dargestellt, wobei im Bereich der Mutter 7 ein Querschnitt entlang der Mittellinie zu sehen ist. Deutlich erkennbar sind die fingerförmigen Elemente 19, die in die Bohrung der Mutter 7 hinein ragen und in eine Richtung gerichtet sind, die der Richtung der Schenkel 3, 5 abgewandt ist. Deutlich erkennbar ist auch die Anfasung 21 des Zentrieransatzes 16.

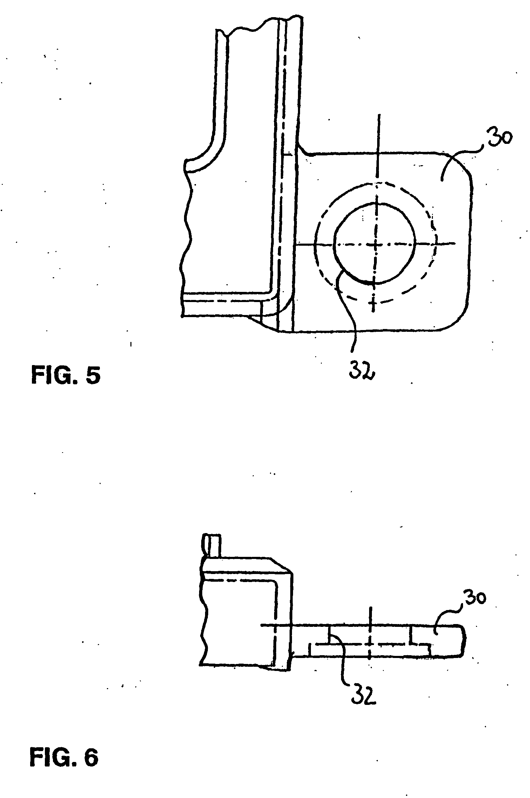

In den Figuren 5 und 6 ist ein Bauelement 30 in einer Ansicht von oben bzw. von der Seite dargestellt, das mittels eines erfindungsgemäßen Befestigungselementes befestigt werden soll. Bei einem derartigen Bauelement kann es sich beispielsweise um eine Innenverkleidung eines Kraftfahrzeugs oder ein Armaturenelement oder dergleichen handeln. Das Bauelement 30 ist in der Umgebung des Befestigungsloches 32 als Lasche ausgebildet. Es ist jedoch nicht zwingend, eine Lasche vorzusehen - das Befestigungsloch kann auch unmittelbar an der Innenverkleidung oder einer Armatur oder dergleichen ausgebildet sein. In dem in den Figuren 5 und 6 dargestellten Ausführungsbeispiel weist das Befestigungsloch 32 zwei unterschiedliche Durchmesser auf, wobei der Bereich mit dem größeren Durchmesser zur Aufnahme des Zentrieransatzes des Befestigungselementes dient.

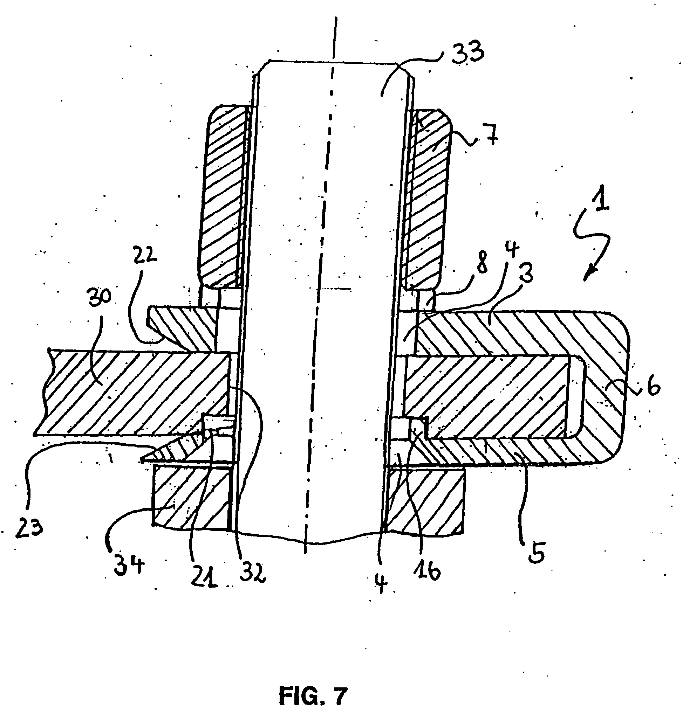

Figur 7 zeigt die Verbindung eines Bauelementes 30 mit einem weiteren Bauelement 34 durch eine Schraube 33 und ein erfindungsgemäßes Befestigungselement 1. In dem in Figur 7 dargestellten Ausführungsbeispiel weist die Mutter 7 ein Gewinde auf, das in das Gewinde der Schraube 33 eingreift.

Im Folgenden werden die Schritte beschrieben, die ausgeführt werden, um die Bauelemente 30 und 34 mittels des Befestigungselementes 1 und der Schraube 33 zu verbinden. Hierfür wird das Befestigungselement 1 zunächst so auf das Bauelement 30 aufgesteckt, dass die beiden Schenkel 3, 5 das Bauelement 30 umgreifen. Dabei sind die durchgehenden Öffnungen 4 der beiden Schenkel 3, 5 auf beiden Seiten des Befestigungsloches 32 des Bauelementes 30 angeordnet. Der Zentrieransatz 16 greift in den erweiterten Abschnitt des Befestigungsloches 32 ein, so dass das Befestigungselement 1 auf dem Bauelement 30 ohne zusätzliche Halteeinrichtungen festgehalten ist. Das Einführen des Bauelementes 30 in das Befestigungselement 1 wurde dabei durch die Anfasungen 21, 22, 23 erleichtert. Anschließend wird auf der der Mutter 7 abgewandten Seite des Befestigungselements 1 am zweiten Schenkel 5 das weitere Bauelement 34 so angeordnet, dass die durchgehende Öffnung dieses Bauelements über der durchgehenden Öffnung 4 des zweiten Schenkels des Befestigungselements liegt. Anschließend wird die Schraube 33 durch die Öffnungen der Bauelemente 30, 34 und des Befestigungselements 1 hindurch bewegt und in die Bohrung der Mutter eingeschraubt, so dass die Gewinde von Schraube und Mutter ineinander greifen.

Es ist auch möglich, dass die Bohrung der Mutter 7 zunächst eine glatte Innenwand aufweist und beim Einführen der Schraube durch das Gewinde der Schraube ein Gewinde in der Innenwand der Mutter geschnitten wird.

In einem weiteren Ausführungsbeispiel kann ein Stift oder Bolzen als Verbindungselement auf einer Unterlage befestigt sein. Eine derartige Unterlage ist beispielsweise die Karosserie eines Kraftfahrzeuges. Der Stift oder Bolzen ist vorzugsweise mittels Schweißen auf der Unterlage befestigt. Bei diesem Ausführungsbeispiel ist eine Befestigung eines Bauelements an dem Stift oder Bolzen gewünscht. Hierbei wird zunächst wie oben beschrieben das Befestigungselement 1 auf das Bauelement aufgesteckt. Anschließend wird der Stift oder Bolzen, der vorzugsweise ein Gewinde aufweist, durch die übereinander liegenden durchgehenden Öffnungen des Befestigungselements 4 und des Bauelements gesteckt bis die an der Innenwand der Bohrung 12 der Mutter 7 des Befestigungselements angeordneten fingerförmigen Elemente 19 in eine Rille des Gewindes des Stifts oder Bolzens eingreifen. Der Stift oder Bolzen ist somit in der Mutter 7 festgehalten.

Zum Lösen der Mutter 7 von den übrigen Teilen des Befestigungselementes 1 wird bei den anhand von Figur 1 bis 4 und 7 dargestellten Ausführungsbeispielen eine Trennkraft in Form eines Drehmomentes verwendet. Ein Schraubenschlüssel wird am Sechskant der Mutter 7 angesetzt und mit einem Drehmoment gedreht, so dass die an den Stegen 8 vorgesehenen Sollbruchstellen durchtrennt werden und die Mutter 7 unabhängig von den übrigen Teilen des Befestigungselementes 1 beweglich ist. Die Mutter 7 kann demnach von dem Stift oder Bolzen gelöst werden. Die Verbindung zwischen Bolzen oder Stift und Bauelement ist somit lösbar, ohne dass das der Mutter entgegengesetzte Ende des Stifts oder Bolzen zugänglich sein muss.

In weiteren Ausführungsbeispielen kann die Trennkraft auch eine in Richtung der Achse des Stiftes oder Bolzens wirkende Kraft sein, mit der an der Mutter 7 gezogen wird, wobei die Ziehrichtung von den Schenkeln 3, 5 weg gerichtet ist. Es besteht außerdem die Möglichkeit, die Verbindung zwischen Mutter 7 und erstem Schenkel 3 mittels einer Schneidkraft zu durchtrennen.

In einem weiteren Ausführungsbeispiel kann vorzugsweise dann, wenn der Stift oder Bolzen und die Mutter ein Gewinde aufweisen, die Mutter bereits beim Befestigen des Bauelements gelöst werden indem eine Trennkraft aufgebracht wird, wobei anschließend die Mutter noch einmal in Richtung des zweiten Schenkels festgezogen wird.

Im Rahmen der Erfindung wird als Stift oder Bolzen auch eine Schraube angesehen.

## Patentansprüche

1. Befestigungselement (1) zum Befestigen eines ein Befestigungsloch (32) aufweisenden Bauelements (30), wobei das Befestigungselement einen im wesentlichen U-förmigen Klemmbereich hat, der im Gebrauch das Bauelement zumindest teilweise umgreift und zwei gegenüberliegende Schenkel (3, 5) hat, die über einen Verbindungsbereich (6) einstückig miteinander verbunden sind, wobei die Schenkel mit durchgehenden Öffnungen (4) versehen sind, die zur Aufnahme eines das Befestigungsloch des Bauelements durchdringenden Stifts oder Bolzens (33) dienen, wobei an einem ersten Schenkel (3) auf der dem zweiten Schenkel (5) abgekehrten Seite eine Mutter (7) derart angebracht ist, dass die Verbindung zwischen dem ersten Schenkel (3) und der Mutter (7) mittels einer auf die Mutter (7) einwirkenden Trennkraft lösbar ist, **dadurch gekennzeichnet, dass** die Mutter mit dem ersten Schenkel über mit Sollbruchstellen versehene Stege (8) verbunden ist.

2. Befestigungselement nach Anspruch 1 **dadurch gekennzeichnet, dass** die Trennkraft ein Drehmoment ist.

3. Befestigungselement nach einem der Ansprüche 1 oder 2, **dadurch gekennzeichnet, dass** die Innenwand (13) der Mutter glatt ausgebildet ist.

4. Befestigungselement nach einem der Ansprüche 1 oder 2, **dadurch gekennzeichnet, dass** die Mutter eine mindestens teilweise mit einem Innengewinde versehene Bohrung aufweist.

5. Befestigungselement nach einem der Ansprüche 1 oder 2, **dadurch gekennzeichnet dass** die Mutter eine Bohrung aufweist, in der Sperrkörper (19) angeordnet sind, die federnd an einem in der Bohrung befindlichen Stift oder Bolzen anliegen und die eine Bewegung des Stifts oder Bolzens in Richtung des Klemmbereichs, von der Mutter aus gesehen, sperren, eine Bewegung des Stifts oder Bolzens in der Gegenrichtung zulassen.

6. Befestigungselement nach einem der Ansprüche 1 bis 5, **dadurch gekennzeichnet, dass** das Befestigungselement seitlich an einem der Schenkel zwei Laschen (10) aufweist.

7. Befestigungselement nach einem der Ansprüche 1 bis 6, **dadurch gekennzeichnet, dass** mindestens ein Schenkel einen in Richtung des jeweils anderen Schenkels vorspringenden Zentrieransatz (16) aufweist.

8. Befestigungselement nach Anspruch 7, **dadurch gekennzeichnet, dass** der Zentrieransatz eine Anfasung (21) aufweist.

9. Befestigungselement nach einem der Ansprüche 1 bis 8, **dadurch gekennzeichnet, dass** der erste und/oder der zweite Schenkel eine Anfasung (22, 23) aufweisen.

## Claims

1. Fastener (1) for fastening a component (30) that comprises a mounting hole (32), wherein the fastener has an essentially U-shaped clamping region that in use at least partially grips around the component and has two opposing legs (3, 5) that are connected together as a single piece by a connecting region (6), wherein the legs are provided with through holes (4) that serve to accommodate a pin or stud (33) that passes through the mounting hole of the component, wherein a nut (7) is attached to a first leg (3) on the side facing away from the second leg (5) such that the connection between the first leg (3) and the nut (7) can be released by means of a separating force acting on the nut (7), **characterised in that** the nut is connected to the first leg by means of webs (8) provided with predefined breaking points.

2. Fastener as claimed in claim 1, **characterised in that** the separating force is a torque.

3. Fastener as claimed in one of claims 1 or 2, **characterised in that** the inner wall (13) of the nut is smooth.

4. Fastener as claimed in one of claims 1 or 2, **characterised in that** the nut comprises a bore that is provided at least in part with an internal thread.

5. Fastener as claimed in one of claims 1 or 2, **characterised in that** the nut comprises a bore in which are arranged latching bodies (19) that resiliently rest against a pin or stud located in the bore and that block a movement of the pin or stud toward the clamping region, viewed from the nut, while permitting movement of the pin or stud in the opposite direction.

6. Fastener as claimed in one of claims 1 - 5, **characterised in that** the fastener comprises two tabs (10) positioned laterally on one of the legs.

7. Fastener as claimed in one of claims 1 - 6, **characterised in that** at least one leg comprises a centering projection (16) projecting toward the respective other leg.

8. Fastener as claimed in claim 7, **characterised in that** the centering projection comprises a chamfer (21).

9. Fastener as claimed in one of claims 1 - 8, **characterised in that** the first and/or the second leg comprises a chamfer (22, 23).

## Revendications

1. Elément de fixation (1) destiné à la fixation d'un élément de construction (30) comportant une ouverture de fixation (32), l'élément de fixation comprenant une zone de serrage essentiellement en forme de U, qui, à l'utilisation, entoure partiellement l'élément de construction et comporte deux branches (3, 5) opposées l'une à l'autre, qui sont reliées l'une à l'autre de façon monobloc par l'intermédiaire d'une zone de liaison (6), les branches étant pourvues d'ouvertures débouchantes (4) qui servent à recevoir une tige ou un axe (33) traversant l'ouverture de fixation de l'élément de construction, un écrou (7) étant disposé sur la première branche (3), sur la face éloignée de la seconde branche (5), d'une manière telle que la liaison entre la première branche (3) et l'écrou (7) puisse être libérée grâce à une force de séparation agissant sur l'écrou (7),
**caractérisé en ce que** l'écrou est relié à la première branche par l'intermédiaire de nervures (8) pourvues d'amorces de rupture.

2. Elément de fixation selon la revendication 1, **caractérisé en ce que** la force de séparation est un couple de rotation.

3. Elément de fixation selon l'une des revendications 1 ou 2, **caractérisé en ce que** la paroi intérieure (13) de l'écrou est de configuration lisse.

4. Elément de fixation selon l'une des revendications 1 ou 2, **caractérisé en ce que** l'écrou comporte un alésage pourvu au moins partiellement d'un filetage intérieur.

5. Elément de fixation selon l'une des revendications 1 ou 2, **caractérisé en ce que** l'écrou comporte un alésage dans lequel sont disposés des corps de verrouillage (19) qui se plaquent élastiquement contre une tige ou un axe placé(e) à l'intérieur de l'alésage, et qui bloquent un déplacement de la tige ou de l'axe en direction de la zone de serrage, vu depuis l'écrou, et autorisent un déplacement de la tige ou de l'axe dans la direction opposée.

6. Elément de fixation selon l'une des revendications 1 à 5, **caractérisé en ce que** l'élément de fixation comporte deux pattes (10) aménagées latéralement sur l'une des branches.

7. Elément de fixation selon l'une des revendications 1 à 6, **caractérisé en ce que** l'une au moins des branches comporte une saillie de centrage (16) faisant saillie en direction de l'autre branche.

8. Elément de fixation selon la revendication 7, **caractérisé en ce que** la saillie de centrage comporte un chanfrein (21).

9. Elément de fixation selon l'une des revendications 1 à 8, **caractérisé en ce que** les première et/ou seconde branches comportent un chanfrein (22, 23)
